(19) Europäisches Patentamt / European Patent Office / Office européen des brevets

(11) **EP 3 764 704 B1**

(12) **EUROPEAN PATENT SPECIFICATION**

(45) Date of publication and mention
of the grant of the patent:
**27.07.2022  Bulletin 2022/30**

(21) Application number: **19782210.9**

(22) Date of filing: **22.03.2019**

(51) International Patent Classification (IPC):
**H04B 3/54** *(2006.01)*    **H04B 3/58** *(2006.01)*
**H04W 52/52** *(2009.01)*    **H04W 52/04** *(2009.01)*

(52) Cooperative Patent Classification (CPC):
**H04B 3/58; H04B 3/54;** H04B 2203/5408;
H04B 2203/5425

(86) International application number:
**PCT/CN2019/079210**

(87) International publication number:
**WO 2019/192335 (10.10.2019 Gazette 2019/41)**

(54) **RELAY TRANSMISSION CONFIGURATION METHOD, AND RELAY TRANSMISSION METHOD AND APPARATUS FOR PLC SYSTEM**

RELAISÜBERTRAGUNGSKONFIGURATIONSVERFAHREN SOWIE
RELAISÜBERTRAGUNGSVERFAHREN UND -VORRICHTUNG FÜR PLC-SYSTEM

PROCÉDÉ DE CONFIGURATION DE TRANSMISSION DE RELAIS AINSI QUE PROCÉDÉ DE
TRANSMISSION DE RELAIS ET APPAREIL POUR SYSTÈME PLC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.04.2018  CN 201810288750**

(43) Date of publication of application:
**13.01.2021  Bulletin 2021/02**

(73) Proprietor: **HUAWEI TECHNOLOGIES CO., LTD.
Shenzhen, Guangdong 518129 (CN)**

(72) Inventors:
• **ZENG, Yan
Guangdong 518129 (CN)**

• **WANG, Xiang
Guangdong 518129 (CN)**
• **PAN, Dao
Guangdong 518129 (CN)**

(74) Representative: **Gill Jennings & Every LLP
The Broadgate Tower
20 Primrose Street
London EC2A 2ES (GB)**

(56) References cited:
**EP-A1- 2 733 857      CN-A- 101 184 007
CN-A- 101 202 597      CN-A- 102 204 365
CN-A- 102 265 512      US-A1- 2015 271 021
US-A1- 2015 304 964    US-A1- 2015 372 717**

**Description**

**TECHNICAL FIELD**

The present invention relates to the field of power line communication, and in particular, to a relay transmission configuration method and apparatus for a PLC system.

**BACKGROUND**

A home PLC (power line communication) technology is mainly used to resolve a problem of insufficient home wireless network coverage. Using a power line as a channel for Wi-Fi signal backhaul can reduce network construction costs. Signal attenuation of a PLC network increases as a distance increases, and this causes a problem that two nodes far away from each other cannot communicate at limited transmit power or that two nodes can communicate only at a low rate at limited transmit power. To resolve a problem that two nodes in a PLC system cannot communicate with each other or a transmission rate is low, a signal needs to be amplified by using a relay node between the two nodes before being output. How to perform relay transmission in the PLC system is an urgent problem to be resolved currently.

US2015/372717 describes a slotted message access protocol for transmitting messages in a communication network.

EP2733857 describes a method for relaying messages in a PLC network comprising a relay node and at least two end nodes attached to said relay node.

US2015/271021 describes a network device including a network controller and at least one network interface coupled to the network controller that includes at least one media access control (MAC) device configured to be coupled to at least one physical layer interface (PHY).

**SUMMARY**

The present invention is defined by the appended claims. Embodiments not falling within the scope of the claims are exemplary only. A technical problem to be resolved by embodiments of the present invention is to provide a relay transmission method and apparatus for a PLC system, to resolve a problem of transmission performance degradation caused by an excessively long communication distance between two nodes in the PLC system, and ensure real-time performance of the PLC system.

According to a first aspect, this application provides a relay transmission configuration method for a PLC system, including: scheduling, by a domain master node, a transmission slot in a first media access control MAC (media access control) period, where the first MAC period includes m transmission time windows in different channel states, and m is an integer greater than 0; determining, by the domain master node, a location of the scheduled transmission slot; and sending, by the domain master node, transmission slot configuration information to a relay node, where the transmission slot configuration information is used to indicate one or more of the location of the transmission slot and gain information associated with a transmission time window in which the transmission slot is located.

The domain master node periodically schedules a resource (for example, a time domain resource or a frequency domain resource). A MAC period is a time interval for the domain master node to schedule a resource. The MAC period includes one or more alternating current periods, and the alternating current period is a period of an alternating current on a power line of the PLC system. For example, for 50 Hz mains, the alternating current period is 0.02s and the MAC period is 0.04s. The first MAC period is any period in the PLC system. The first MAC period is pre-divided into m transmission time windows. The transmission time window is a time interval. The m transmission time windows may be continuously distributed. Each of n MAC periods after the first MAC period may be divided into m transmission time windows by using a rule that is the same as that of the first MAC period. A value of n may be a pre-stored fixed value, or may be a value indicated by the domain master node. This is not limited in this embodiment of the present invention.

During implementation of this embodiment of the present invention, the domain master node schedules the transmission slot in the transmission time windows in the m different channel states, and notifies the relay node of the location of the transmission slot and the gain information associated with the transmission time window in which the transmission slot is located. In this way, the relay node performs analog relay processing in different time segments in the transmission slot by using corresponding gain information, thereby ensuring that transmission performance of a transmission path is optimal in different time windows, and avoiding transmission performance degradation caused by relay processing performed by the relay node by using fixed gain information in the transmission slot.

In a possible design, the transmission slot configuration information is further used to indicate the gain information of the transmission slot.

In a possible design, before the scheduling, by the domain master node, a transmission slot in a first MAC period, the method further includes:

scheduling, by the domain master node, a channel assessment time window in a second MAC period, where the second MAC period is before the first MAC period;

obtaining, by the domain master node, a channel quality parameter value of a transmission path in the channel assessment time window;

determining, by the domain master node, a channel state of the transmission path based on the channel quality parameter value;

dividing, by the domain master node, the second MAC period into m transmission time windows based on the channel state; and

determining, by the domain master node, gain information associated with the m transmission time windows respectively.

The transmission path indicates a communication link between a source node and a destination node, and the transmission path further includes one or more relay nodes. The channel state indicates a state in which the channel quality parameter value of the transmission path reaches a stable state. Transmission paths in different channel transmission have different transmission capabilities. The channel state of the transmission path has specific duration. A transmission quality parameter value includes one or more of a transmission rate, a delay, and an SNR (signal-to-noise ratio). The transmission path may have a plurality of different channel states in the second MAC period. For example, a length of the second MAC period is 0.04s, and the domain master node determines, based on the channel quality parameter value that is of the transmission path and that is obtained in the second MAC period, that a delay of the transmission path in first 0.02s is 5 ms, and a delay of the transmission path in last 0.02s is 1 ms. In this case, there are two different channel states in the second MAC period. The domain master node divides the second MAC period into two transmission time windows: a transmission time window 1 and a transmission time window 2. The transmission time window 1 is a time interval of the first 0.02s, and the transmission time window 2 is a time interval of the last 0.02s. The domain master node determines gain information of each transmission time window based on channel quality parameters values of transmission paths in different transmission time windows.

According to the foregoing description, the domain master node divides the second MAC period into the m transmission time windows based on the channel quality parameter value of the transmission path in the second MAC period, each transmission time window has a different channel state and a different transmission capability, and each transmission time window is associated with different gain information, so that the relay node adaptively performs relay amplification based on different transmission time windows by using different gain information, thereby improving performance of the transmission path.

In a possible design, the domain master node notifies the relay node of locations of the m transmission time windows and the gain information associated with the m transmission time windows respectively, and notifies a source node and a destination node of the locations of the m transmission time windows. Optionally, the domain master node may number the gain information associated with the m transmission time windows respectively, and notify the relay node of numbers of the m pieces of gain information.

In a possible design, the domain master node divides the second MAC period into m transmission time windows of an equal length, where the second MAC period is before the first MAC period.

In a possible design, the obtaining, by the domain master node, a channel quality parameter of a transmission path in the channel assessment time window includes:

scheduling, by the domain master node, a channel assessment time window in the second MAC period;

sending, by the domain master node, a channel information request to a relay node on the transmission path, where the channel information request includes one or more of start time information of the channel assessment time window, end time information of the channel assessment time window, and a requested channel quality parameter type; and

receiving, by the domain master node, a channel quality parameter value that is of each subpath included on the transmission path and that is sent by the relay node.

The channel assessment time window is a time segment. The relay node sends a probe frame in the channel assessment time window, and another node that receives the probe frame evaluates channel quality of a transmission path.

In a possible design, the determining, by the domain master node, gain information associated with the m transmission time windows respectively includes:

determining, by the domain master node for each transmission time window, gain information based on power spectral density and a channel attenuation value.

In a possible design, the requested channel quality parameter type includes one or more of a bit loading table, a channel attenuation value, a signal-to-noise ratio, and noise power.

In a possible design, determining, by the domain master node, physical layer transmission parameter values associated with the m transmission time windows respectively includes:
determining, for each transmission time window, a physical layer transmission parameter value of a subcarrier based on a signal-to-noise ratio of the subcarrier and a bit loading table of the subcarrier.

In a possible design, the domain master node notifies a source node and a destination node on a transmission path of physical layer transmission parameters associated with the m transmission time windows respectively. Optionally, the domain master node may number the physical layer transmission parameters associated with the m transmission time windows respectively, and send the physical layer transmission parameters associated with the m transmission time windows respectively and numbers to the source node and the destination node on the transmission path.

In a possible design, before the obtaining, by the domain master node, a channel quality parameter value of a transmission path in a second MAC period, the method further includes:
detecting, by the domain master node, that a source node and a destination node cannot communicate with each other or that a transmission performance parameter value between the source node and the destination node does not satisfy a preset condition.

When the domain master node detects that the source node and the destination node cannot communicate with each other or the transmission performance parameter between the source node and the destination node does not satisfy the preset condition, the domain master node needs to select a relay node between the source node and the destination node. There may be one or more selected relay nodes, and data is transmitted between the source node and the destination node by using the selected relay node.

According to a second aspect, this application provides a relay transmission method for a PLC system, including:

receiving, by a relay node, transmission slot configuration information from a domain master node, where the transmission slot configuration information is used to indicate a location of a transmission slot, the transmission slot is located in a first MAC period, and the first MAC period is divided into m transmission time windows;
determining, by the relay node, gain information associated with a transmission time window in which the transmission slot is located;
performing, by the relay node, relay processing on a received signal in the transmission slot based on the associated gain information; and
outputting, by the relay node, the signal on which the relay processing has been performed.

According to the foregoing description, in the second MAC period, the relay node determines a transmission time window in which a scheduled transmission slot is located, obtains gain information associated with the transmission time window, and performs analog relay amplification in different time windows in the transmission slot based on corresponding gain information. The relay node does not need to perform processes such as encoding and decoding on a received signal, thereby reducing a delay of relay processing. In addition, the relay node adaptively performs relay amplification based on different channel quality by using proper gain information, and this, compared with relaying by using a single piece of gain information in a transmission slot, can improve transmission performance between a source node and a destination node.

In a possible design, the transmission slot configuration information includes one or more of location information of the transmission slot and a number of the gain information. The transmission slot configuration information may be sent in a MAP frame.

In a possible design, the relay node receives window configuration information from the domain master node in the first MAC period, where the window configuration information indicates locations of m transmission time windows obtained through division of the first MAC period and gain information associated with each transmission time window. Optionally, the window configuration information includes location information of the m transmission time windows, the gain information associated with the m transmission time windows respectively, and numbers of the gain information associated with the m transmission time windows respectively.

According to a third aspect, this application provides a relay transmission apparatus for a PLC system, including:
a scheduling unit, configured to schedule a transmission slot in a first media access control MAC period, where the first MAC period includes m transmission time windows in different channel states, and m is an integer greater than 0;

a determining unit, configured to determine a location of the scheduled transmission slot; and
a sending unit, configured to send transmission slot configuration information to a relay node, where the transmission slot configuration information is used to indicate one or more of the location of the transmission slot and gain information associated with a transmission time window in which the transmission slot is located.

In a possible design, the apparatus further includes a window configuration unit, configured to: obtain a channel quality parameter value of a transmission path in a second MAC period, where the second MAC period is before the first MAC period;

> determine a channel state of the transmission path based on the channel quality parameter value;
> divide the second MAC period into m transmission time windows based on the channel state; and
> determine gain information associated with the m transmission time windows respectively.

In a possible design, that the window configuration unit is further configured to:

> schedule a channel assessment time window in the second MAC period;
> send a channel information request to a relay node on the transmission path, where the channel information request includes start time information of the channel assessment time window, end time information of the channel assessment time window, and a requested channel quality parameter type; and
> receive a channel quality parameter value that is of each subpath included on the transmission path and that is sent by the relay node.

In a possible design, that the window configuration unit is configured to determine gain information associated with the m transmission time windows respectively includes:
determining, for each transmission time window, gain information based on power spectral density and a channel attenuation value.

In a possible design, the window configuration unit is further configured to:

> determine physical layer transmission parameter values associated with the m transmission time windows respectively; and
> send the physical layer transmission parameter values associated with the m transmission time windows respectively to a source node and a destination node on the transmission path.

In a possible design, that the window configuration unit is configured to determine physical layer transmission parameter values associated with the m transmission time windows respectively includes:
determining, for each transmission time window, a physical layer transmission parameter value of a subcarrier based on a signal-to-noise ratio of the subcarrier and a bit loading table of the subcarrier.

In a possible design, the apparatus further includes:

> a selection unit, configured to: detect that a source node and a destination node cannot communicate with each other, or a transmission performance parameter value between a source node and a destination node does not satisfy a preset condition; and
> select a relay node between the source node and the destination node.

According to a fourth aspect, this application provides a relay transmission apparatus for a PLC system, including:

> a receiving unit, configured to receive transmission slot configuration information from a domain master node, where the transmission slot configuration information is used to indicate a location of a transmission slot, the transmission slot is located in a first MAC period, and the first MAC period is divided into m transmission time windows;
> a determining unit, configured to determine gain information associated with a transmission time window in which the transmission slot is located;
> a relay unit, configured to perform relay processing on a received signal in the transmission slot based on the associated gain information; and
> a sending unit, configured to output the signal on which the relay processing has been performed.

In a possible design, the receiving unit is further configured to receive window configuration information from the domain master node in the first MAC period, where the window configuration information indicates locations of the m transmission time windows and gain information associated with the m transmission time windows respectively.

In a possible design, the transmission slot configuration information includes one or more of location information of the transmission slot and a number of the gain information.

## BRIEF DESCRIPTION OF DRAWINGS

To describe the technical solutions in the embodiments of the present invention or in the background more clearly, the following briefly describes the accompanying drawings for describing the embodiments of the present invention or the background.

FIG. 1 is a diagram of a network architecture of a communications system according to an embodiment of the present invention;

FIG. 2a is a schematic interaction diagram of a relay transmission method for a PLC system according to an embodiment of the present invention;

FIG. 2b is a sequence diagram of relay transmission according to an embodiment of the present invention;

FIG. 2c is a sequence diagram of relay transmission according to an embodiment of the present invention;

FIG. 2d is a network topology diagram of a PLC system according to an embodiment of the present invention;

FIG. 3 is a schematic structural diagram of an apparatus according to an embodiment of the present invention;

FIG. 4 is another schematic structural diagram of an apparatus according to an embodiment of the present invention; and

FIG. 5 is another schematic structural diagram of an apparatus according to an embodiment of the present invention.

## DESCRIPTION OF EMBODIMENTS

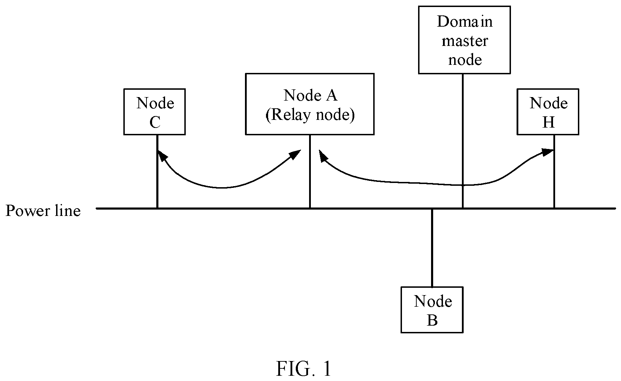

The embodiments of this application may be applied to a PLC system. FIG. 1 is a schematic architectural diagram of a communications system according to this application. The communications system includes a plurality of nodes. The plurality of nodes include a domain master node. The nodes are interconnected by using a circuit line. The domain master node is configured to manage another node in the PLC system. A transmission medium in the PLC system is a power line, and all nodes in the PLC system form a domain The PLC system serves as a shared medium network, and a node in the PLC system may be a communication node End Point (EP), or may be a working household appliance. In this embodiment, a node is a communication node unless otherwise specified, and any two nodes in the PLC system can perform point-to-point communication. For example, referring to FIG. 1, the PLC system includes a node C, a node A, a node H, a node B, and the domain master node. When the node C and the node H cannot communicate with each other or a transmission performance parameter value does not satisfy a preset condition, a relay node (the node A) is introduced between the node C and the node H. The relay node performs relay amplification on a signal from the node C and then sends the signal to the node H, and performs relay amplification on a signal from the node H and then sends the signal to the node C. It should be noted that a connection manner and a quantity of devices in FIG. 1 are merely examples for description, and do not constitute a limitation on this embodiment of the present invention.

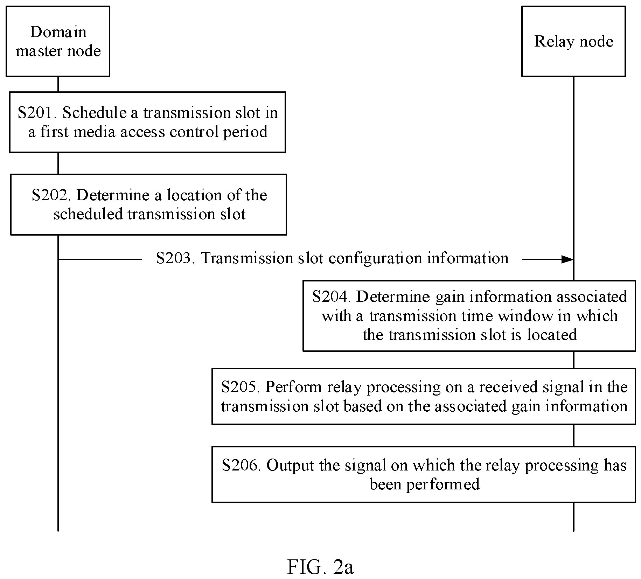

FIG. 2a is a schematic interaction diagram of a relay transmission method for a PLC system according to an embodiment of the present invention. In this embodiment of the present invention, the method includes the following steps.

S201. A domain master node schedules a transmission slot in a first MAC period.

Specifically, the domain master node periodically performs resource scheduling, including but not limited to scheduling of a time domain resource and/or a frequency domain resource. An alternating current (AC) period indicates an alternating current change period. The first media access control (MAC) period includes one or more alternating current periods. Optionally, in the PLC system, an alternating current frequency is 50 Hz, an alternating current period is 0.02s, the first MAC period is two alternating current periods, and the first MAC period is 0.04s. The first MAC period includes m transmission time windows in different channel states, that is, the first MAC period is divided into m transmission time windows. A transmission path in different transmission time windows has different channel states. The channel state indicates a state in which a channel quality parameter value of the transmission path remains stable in a time interval. Different channel states correspond to different channel quality parameter values. m is an integer greater than or equal to 0. When the first MAC period is divided into a plurality of transmission time windows, the plurality of transmission time windows may be continuously distributed. It should be noted that the foregoing transmission path is a communication link between a source node and a destination node, the communication link includes a determined relay node, and there may be one or more relay nodes.

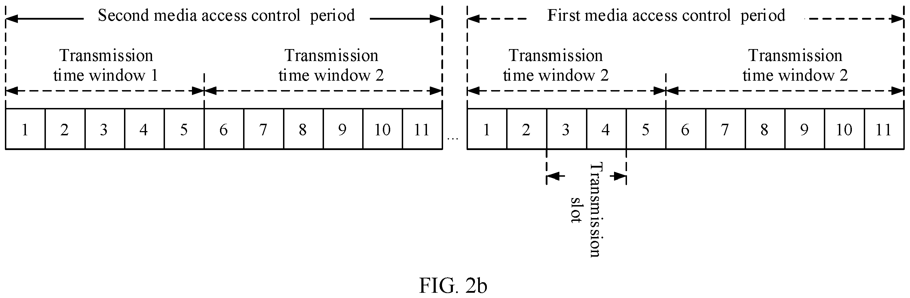

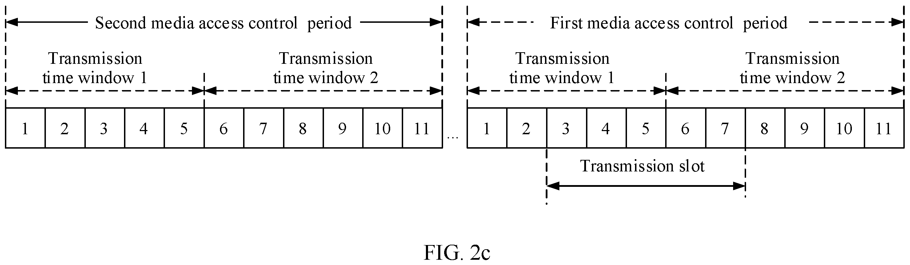

For example, referring to FIG. 2b and FIG. 2c, the first MAC period includes 11 slots, and a length of each slot is a TTI of the PLC system. A proper time granularity may be selected based on a requirement for duration of a TTI (transmission time interval) of the PLC system. This is not limited in this embodiment of the present invention. The 11 slots are respectively denoted as a slot 1 to a slot 11. The first MAC period is divided into two transmission time windows: a transmission time window 1 and a transmission time window 2. The transmission time window 1 corresponds to the slot 1 to the slot 5, and the transmission time window 2 corresponds to the slot 6 to the slot 11. A bit loading table of the transmission path in the transmission time window 1 is a bit loading table 1, and a bit loading table of the transmission path in the transmission time window 2 is a bit loading table 2. The bit loading table indicates a bit width of a subcarrier on the transmission path.

The domain master node schedules a transmission slot in a MAC period, and a method for scheduling the transmission slot is as follows:

Optionally, the transmission slot occupies one complete transmission time window in the m transmission time windows, or occupies a partial area of one of the m transmission time windows. The domain master node determines a transmission time window in which the scheduled transmission slot is located. The domain master node prestores or preconfigures an association relationship between the m transmission time windows and gain information. The domain master node determines, based on the association relationship, gain information associated with the transmission time window in which the scheduled transmission slot is located. Optionally, the domain master node may alternatively not notify the relay node of the gain information associated with the transmission time window in which the transmission slot is located, and the relay node determines the associated gain information based on a location of the transmission slot.

For example, referring to FIG. 2b, a transmission slot scheduled by the domain master node corresponds to the slot 3 and the slot 4, and has a length of two slots. The transmission slot occupies only a partial area of the transmission time window 1. The domain master node obtains gain information 1 associated with the transmission time window 1 in which the scheduled transmission slot is located.

Optionally, the scheduled transmission slot occupies at least two complete transmission time windows or at least two incomplete transmission time windows in the m transmission time windows, or at least two transmission time windows including both a complete transmission time window and an incomplete transmission time window. The domain master node prestores or preconfigures an association relationship between the m transmission time windows and gain information. The domain master node determines, based on the at least two transmission time windows in which the determined scheduled transmission slot is located and the association relationship, gain information associated with the at least two transmission time windows respectively. Optionally, the domain master node may alternatively not notify the relay node of the gain information associated with the transmission time window in which the transmission slot is located, and the relay node determines the associated gain information based on a location of the transmission slot.

For example, referring to FIG. 2c, a transmission slot scheduled by the domain master node corresponds to the slot 3 to the slot 7, and has a length of five slots. The transmission slot occupies partial areas of the transmission time window 1 and the transmission time window 2. The domain master node obtains gain information 1 associated with the transmission time window 1 in which the transmission slot is located, and gain information 2 of the transmission time window 2 in which the transmission slot is located.

In a possible implementation, before the scheduling, by the domain master node, a transmission slot in a first MAC period, the method further includes:

obtaining, by the domain master node, a channel quality parameter value of a transmission path in a second MAC period;

determining, by the domain master node, a channel state of the transmission path based on the channel quality parameter value;

dividing, by the domain master node, the second MAC period into m transmission time windows based on the channel state; and

determining, by the domain master node, gain information associated with the m transmission time windows respectively.

Specifically, the second MAC period is before the first MAC period, and nodes on the transmission path include a source node, one or more relay nodes, and a destination node. Optionally, the domain master node may instruct any node on the transmission path to periodically send a probe data packet to another node, and the another node evaluates, based on the received probe data packet, a channel quality parameter value of a subpath corresponding to the transmission path in the second MAC period. Then, channel quality parameter values of all subpaths corresponding to the transmission path in the second MAC period are collected to obtain the channel quality parameter value of the transmission path in the second MAC period. Optionally, the channel quality parameter value includes but is not limited to one or more of a bit loading table, an SNR, a channel attenuation value, and noise power, wherein the bit loading table indicates a bit width of each subcarrier on the transmission path. It should be noted that, when a data packet is transmitted on the transmission path by using a plurality of subcarriers, the channel quality parameter value of the transmission path may be a channel quality parameter value of each subcarrier. The second MAC period is divided into one or more transmission time windows by using the channel quality parameter value of the transmission path. In this way, the relay node can perform analog relay in different transmission time windows by using corresponding gain information, thereby improving data transmission performance of the transmission path.

The channel state indicates a state in which the transmission path remains stable in a period of time. The channel state may be measured as required by using different channel quality parameters, for example, one or more of an SNR, a bit loading table, a transmission rate, or a delay. Based on the channel quality parameters of the transmission path, the transmission path may have one or more channel states in the second MAC period.

It should be noted that, each of n MAC periods after the first MAC period may be divided into m transmission time windows by using a rule that is the same as that of the first MAC period. A value of n may be a pre-stored fixed value, or may be a value indicated by the domain master node. This is not limited in this embodiment of the present invention.

For example, referring to FIG. 2b and FIG. 2c, the domain master node determines, based on the obtained channel quality parameter value of the transmission path, that an SNR of the transmission path in a time interval of the slot 3 to the slot 5 is 20 dB, and an SNR of the transmission path in a time interval of the slot 6 to the slot 9 is 10 dB. The domain master node divides the first MAC period into two transmission time windows based on the channel quality parameter value of the transmission path. To be specific, the domain master node uses a time interval of the slot 1 to the slot 5 as the transmission time window 1, and uses a time interval of the slot 6 to the slot 11 as the transmission time window 2. The domain master node determines, based on the channel quality parameter value of the transmission path in the transmission time window 1, the gain information 1 associated with the transmission time window 1, and the domain master node determines, based on the channel quality parameter value of the transmission path in the transmission time window 2, the gain information 2 associated with the transmission time window 2.

Optionally, a method for dividing, by the domain master node, the first MAC period into m transmission time windows is: dividing the first MAC period into transmission time windows of an equal length, then determining gain information based on a channel quality parameter value of a transmission path in each transmission time window, and sending location information of the m transmission time windows and the gain information of each transmission time window to the relay node. In addition, the domain master node may further number the gain information of each transmission time window, and send a number of the gain information associated with each transmission time window to the relay node, so that the domain master node can subsequently directly indicate, by using the number, which gain information is used by the relay node to perform relay processing.

It should be noted that when the channel quality parameter value of the transmission path in the first MAC period remains unchanged, the first MAC period does not need to be divided into time windows, that is, the entire first MAC period is used as one transmission time window.

In a possible implementation, the determining, by the domain master node, gain information associated with the m transmission time windows respectively includes:
determining, by the domain master node for each transmission time window, gain information based on power spectral density and a channel attenuation value of a sub carrier.

Specifically, the domain master node determines, for each transmission time window, gain information of the subcarrier based on the power spectral density and the channel attenuation value. The gain information associated with the m transmission time windows respectively may be the same or may be different. This is not limited in the present invention.

For example, the first MAC period is divided into two transmission time windows: a transmission time window 1 and a transmission time window 2, power spectral density of the transmission path in the transmission time window 1 is PSD, and a channel attenuation value of the transmission path in the transmission time window 1 is Hac. In this case, a gain factor AGT associated with the transmission time window 1 is: AGT = PSD/Hac.

In a possible implementation, the obtaining, by the domain master node, a channel quality parameter value of a transmission path in the second MAC period includes:

scheduling, by the domain master node, a channel assessment time window in the second MAC period;
sending, by the domain master node, a channel information request to a relay node on the transmission path, where the channel information request includes start time information of the channel assessment time window, end time information, and a requested channel quality parameter type; and
receiving, by the domain master node, a channel quality parameter value that is of each subpath included on the transmission path and that is sent by the relay node.

Specifically, the channel assessment time window is a time segment, and the domain master node may instruct the relay node to determine the channel quality parameter value of each subpath on the transmission path in the first MAC period in a manner of sending a probe frame to another adjacent node in the channel assessment time window. The transmission path includes at least two subpaths. For example, when there is one relay node on the transmission path, the transmission path from the source node to the destination node includes a subpath from the source node to the relay node and a subpath from the relay node to the destination node.

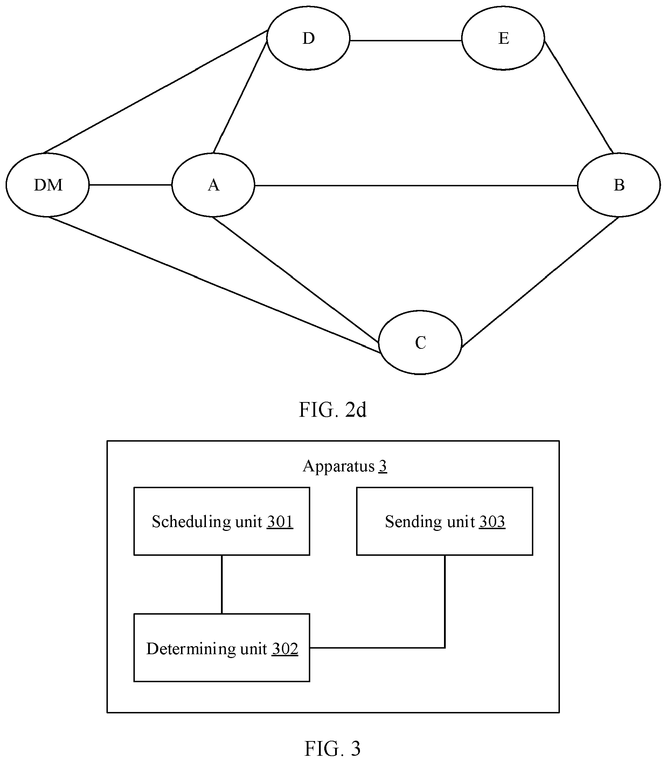

For example, referring to FIG. 2d, DM is the domain master node, A is the source node, and B is the destination node. It can be learned from a network topology structure in FIG. 2d that two transmission paths including relay nodes exist between the source node A and the destination node B. The two transmission paths are respectively source node A-relay node D-relay node E-destination node B and source node A-relay node C-destination node B. The domain master node may select one of the transmission paths according to a preset rule, for example, select a transmission path with a largest capacity, or select a transmission path with a lowest delay, or select a transmission path with a highest signal-to-noise ratio, or select a transmission path with a smallest hop count. This is not limited in the present invention.

In a possible implementation, this embodiment of the present invention further includes:

determining, by the domain master node, physical layer transmission parameter values associated with the m transmission time windows respectively; and

sending the physical layer transmission parameter values associated with the m transmission time windows respectively to a source node and a destination node on the transmission path.

Specifically, the source node and the destination node on the transmission path receive and send data packets by using the physical layer transmission parameter values, and the physical layer transmission parameter values include a size of one or more FEC (forward error correction) codeword, a bit rate of FEC, a quantity of coding repetitions, a bit loading table, and power spectral density. Optionally, the domain master node may number the physical layer parameter values associated with the m transmission time windows respectively, and then send the physical layer transmission parameter values and numbers to the source node and the destination node, so that the domain master node can subsequently directly indicate, by using a number, which physical layer transmission parameter value is used by the source node or the destination node to receive and send data.

Optionally, after scheduling the transmission slot, the domain master node determines a physical layer transmission parameter value associated with the transmission time window in which the transmission slot is located, and then notifies the source node and the destination node of the physical layer transmission parameter value. The source node and the destination node receive and send data packets in the transmission slot based on the associated physical layer transmission parameter value. When there is one transmission time window in which the transmission slot is located, the domain master node notifies the source node and the destination node of a physical layer transmission parameter value associated with the transmission time window. For example, the domain master node sends a number of the physical layer transmission parameter value to the source node and the destination node. When there are two or more transmission time windows in which the transmission slot is located, the domain master node obtains a physical layer transmission parameter value associated with each transmission time window, and notifies the source node and the destination node of each physical layer transmission parameter value.

For example, referring to FIG. 2b and FIG. 2d, the transmission slot corresponds to a time interval of the slot 3 and the slot 4, the transmission slot occupies a partial area of the transmission time window 1, and the domain master node determines that the transmission time window 1 is associated with a physical layer transmission parameter 1. The domain master node sends a number of the physical layer transmission parameter 1 to the source node A and the destination node B. The source node A and the destination node B receive and send data packets in the transmission slot based on the physical layer transmission parameter 1 in a subsequent MAC period.

For another example, referring to FIG. 2c and FIG. 2d, the transmission slot corresponds to the slot 3 to the slot 7, the transmission slot occupies partial areas of the transmission time window 1 and the transmission time window 2, and the domain master node determines that the transmission time window 1 is associated with a physical layer transmission parameter 1, and the transmission time window 2 is associated with a physical layer transmission parameter 2. The domain master node notifies the source node A and the destination node B of the physical layer transmission parameter 1 and the physical layer transmission parameter 2. In a subsequent MAC period, the source node A receives and sends data packets by using the physical layer transmission parameter 1 in the slot 3 to the slot 5, and receives and sends data packets by using the physical layer transmission parameter 2 in the slot 6 and the slot 7.

In a possible implementation, the determining, by the domain master node, physical layer transmission parameter values associated with the m transmission time windows respectively includes:

determining, for each transmission time window, a physical layer transmission parameter value of a subcarrier based on a signal-to-noise ratio of the subcarrier and a bit loading table of the subcarrier.

For example, the physical layer transmission parameter value is a bit width of the subcarrier, and based on the transmission path: source node A-relay node C-destination node B in FIG. 2d, the domain master node calculates, based on an SNR of each subcarrier on the transmission path, a physical layer transmission parameter value (the bit width of the subcarrier) used by the corresponding relay node C to perform relay processing:

$$b_i = \min(\text{round}(\log2(1 + \min((SNR_i)_{A\text{->}C}, (SNR_i)_{C\text{->}B})), bit_{max}).$$

$b_i$ is a bit width carried by each subcarrier, round() is a function for rounding off to a nearest integer, log2() is a function for obtaining a logarithm, and min() is a function for obtaining a minimum value.

$(SNR_i)_{A\text{->}C}$ is an SNR of each subcarrier in a direction from the source node A to the relay node C, and $bit_{max}$ is a maximum quantity of bits that are allowed to be sent on each subcarrier.

$(SNR_i)_{A\text{->}C}$ is obtained through calculation by using $SNR_i$ + Codegain - $SNR_{Gap}$ - Margin, where $SNR_i$ is an SNR value that is of each subcarrier and that is fed back by the relay node C to the domain master node DM, codegain is a coding gain (determined by a bit rate recommended by the domain master node) of the system, $SNR_{Gap}$ indicates a distance that is between an SNR and a Shannon limit and that is required by the system for QAM (quadrature amplitude modulation) when a BER is $10^{-7}$, and Margin is a margin reserved for actual SNR loading.

S202. The domain master node sends transmission slot configuration information to a relay node, and the relay node receives the transmission slot configuration information from the domain master node.

Specifically, the transmission slot configuration information may be sent by using a MAP frame, and the transmission slot configuration information is located in a field of a TXOP descriptor. The transmission slot configuration information is used to indicate a location of a transmission slot and gain information associated with the transmission slot. When the transmission slot occupies one complete transmission time window or a partial area in one transmission time window, the transmission slot configuration information indicates only one piece of gain information, and the transmission slot configuration information may include location information of the transmission slot and a number of the gain information. When the transmission slot occupies a plurality of complete transmission time windows or a plurality of incomplete transmission time windows, the transmission slot configuration information needs to indicate a plurality of pieces of gain information and a correspondence between a transmission time window and gain information. The transmission slot configuration information includes location information of the transmission slot, location information of the plurality of transmission time windows in which the transmission slot is located, and numbers of gain information associated with the plurality of transmission time windows. The relay node receives the transmission slot configuration information from the domain master node, and stores the transmission slot configuration information.

Optionally, S201 to S203 may be used as an independent relay transmission configuration procedure. The domain master node in S201 to S203 may configure any relay node, and is not limited to configuring the relay node in S204 to S206.

S203. The relay node determines gain information of a transmission time window in which the transmission slot is located.

Specifically, when the relay node needs to perform relay processing on a received signal in the first MAC period, the relay node obtains the location of the transmission slot in the first MAC period and the gain information associated with the transmission slot based on the transmission slot configuration information from the domain master node, where the first MAC period is after the second MAC period. When the transmission slot occupies one complete transmission time window or a partial area in one transmission time window, there is one piece of gain information. When the transmission slot occupies a plurality of complete transmission time windows or a plurality of incomplete transmission time windows, each transmission time window is associated with one piece of gain information.

Optionally, the relay node prestores or preconfigures location information of m transmission time windows and gain information associated with the m transmission time windows respectively. The relay node determines a transmission time window in which the transmission slot is located based on the location information of the transmission slot, and then determines associated gain information based on the transmission time window.

Optionally, the domain master node may alternatively notify the relay node of the gain information of the transmission slot, for example, by adding a number of the gain information to the transmission slot configuration information.

For example, referring to FIG. 2b, the relay node learns that a scheduled transmission slot corresponds to a slot 3 and a slot 4 in the second MAC period, and the scheduled transmission slot is associated with gain information 1.

For another example, referring to FIG. 2c, the relay node learns that a scheduled transmission slot corresponds to the slot 3 to the slot 7 in the second MAC period, where the slot 3 to the slot 5 are associated with gain information 1, and the slot 6 and the slot 7 are associated with gain information 2.

S204. The relay node performs relay processing on a received signal in the transmission slot based on the associated gain information.

For example, referring to FIG. 2b and FIG. 2d, a transmission slot corresponds to a time interval of the slot 3 and the slot 4, and the transmission slot occupies a partial area of the transmission time window 1. The domain master node determines that the transmission time window 1 is associated with gain information 1, and the domain master node sends a number of the gain information 1 to the relay node C. The relay node C performs relay processing on the received signal in the slot 3 and the slot 4 based on the gain information 1 in a subsequent MAC period.

For another example, referring to FIG. 2c and FIG. 2d, the transmission slot corresponds to the slot 3 to the slot 7, the transmission slot occupies partial areas of the transmission time window 1 and the transmission time window 2, and the domain master node determines that the transmission time window 1 is associated with gain information 1 and the transmission time window is associated with gain information 2. The domain master node notifies the relay node C of the gain information 1 and the gain information 2. In a subsequent MAC period, the relay node C performs relay processing on the received signal by using the gain information 1 in the slot 3 to the slot 5, and performs analog relay processing on the received signal by using the gain information 2 in the slot 6 and the slot 7.

According to the foregoing description, analog relay amplification is performed in different time windows in a transmission slot based on corresponding gain information, and the relay node does not need to perform processes such as encoding and decoding on a received signal, thereby reducing a delay of relay processing. In addition, the relay node adaptively performs relay amplification based on different channel quality by using proper gain information, and this, compared with relaying by using a single piece of gain information in a transmission slot, can improve transmission performance between the source node and the destination node.

S205. The relay node outputs the signal on which the relay processing has been performed.

Specifically, a working mode of the relay node may be a full-duplex mode. The relay node receives a signal from the source node in a transmission slot, performs relay processing on the signal based on gain information, and then sends the signal to the destination node. In addition, the relay node receives a signal from the destination node in the transmission slot, performs relay processing on the signal based on the gain information, and then sends the signal to the source node. Use of a full-duplex analog relay manner by the relay node can improve a data throughput between the source node and the destination node and reduce a transmission delay.

In a possible implementation, before the obtaining, by the domain master node, a channel quality parameter value of a transmission path in the second MAC period, the method further includes:

detecting, by the domain master node, that the source node and the destination node cannot communicate with each other, or a transmission performance parameter value between the source node and the destination node does not satisfy a preset condition; and determining, by the domain master node, a relay node between the source node and the destination node.

For example, referring to FIG. 2d, the domain master node DM detects that the source node A and the destination node B cannot communicate with each other, or a transmission rate between the source node A and the destination node B is less than a rate threshold, or a delay is greater than a delay threshold. The domain master node DM selects a relay node between the source node A and the destination node B based on topology network information. There may be one or more relay nodes. Transmission by using the relay node can avoid a problem of a hidden node, and improve data transmission performance between the source node and the destination node.

Optionally, S204 to S206 may alternatively be used as an independent relay transmission procedure. The relay node in S204 to S206 may receive a configuration from any domain master node, and is not limited to the configuration of the domain master node in S201 to S203.

According to the foregoing description, the domain master node schedules the transmission slot in the m transmission time windows in the different channel states, and notifies the relay node of the location of the transmission slot and the gain information associated with the transmission time window in which the transmission slot is located, so that the relay node performs relay processing on the received signal by using specified gain information in a specified time segment. In this way, when the relay node performs relay processing, a state of a transmission path is always stable, and relay processing is correspondingly performed by using the gain information associated with the transmission time window, so that the transmission path adaptively remains optimal in transmission performance, thereby avoiding transmission performance degradation caused by relay processing performed by the relay node by using a single piece of gain information in an entire MAC period.

FIG. 2a illustrates in detail a relay transmission method for a PLC system according to an embodiment of the present invention. The following provides a relay transmission configuration apparatus (hereinafter referred to as an apparatus 3) for a PLC system according to the embodiments of the present invention.

It should be noted that the apparatus 3 shown in FIG. 3 may implement the domain master node side in the embodiment shown in FIG. 2a, and the apparatus 3 includes a scheduling unit 301, a determining unit 302, and a sending unit 303. The scheduling unit 301 is configured to schedule a transmission slot in a first media access control MAC period, where the first MAC period includes one or more communication periods and includes m transmission time windows in different channel states, and m is an integer greater than 0. The determining unit 302 is configured to determine a location of the scheduled transmission slot; and the sending unit 303 is configured to send transmission slot configuration information to a relay node, where the transmission slot configuration information is used to indicate the location of the transmission slot, and the location of the transmission slot and locations of the m transmission time windows are used to determine gain information.

Optionally, the transmission slot configuration information is further used to indicate the gain information.

Optionally, the apparatus 3 further includes:

a window configuration unit, configured to obtain a channel quality parameter value of a transmission path in a second MAC period, where the second MAC period is before the first MAC period;
determine a channel state of the transmission path based on the channel quality parameter value;
divide the second MAC period into m transmission time windows based on the channel state; and
determining gain information associated with the m transmission time windows respectively.

Optionally, that the window configuration unit is configured to obtain the channel quality parameter of the transmission path in the second MAC period includes:

11

scheduling a channel assessment time window in the second MAC period;

sending a channel information request to a relay node on the transmission path, where the channel information request includes start time information, end time information of the channel assessment time window, and a requested channel quality parameter type; and

receiving a channel quality parameter value that is of each subpath comprised on the transmission path and that is sent by the relay node.

Optionally, the window configuration unit is configured to determine the gain information associated with the m transmission time windows respectively includes:

for each transmission time window, determining the gain information based on power spectral density and a channel attenuation value.

Optionally, the window configuration unit is further configured to:

determine physical layer transmission parameter values associated with the m transmission time windows respectively;

send the physical layer transmission parameter values associated with the m transmission time windows respectively to a source node and a destination node on the transmission path.

Optionally, that the window configuration unit is configured to determine the physical layer transmission parameter values associated with the m transmission time windows respectively includes:

for each transmission time window, determining a physical layer transmission parameter value of a subcarrier based on a signal-to-noise ratio of the subcarrier and a bit loading table of the subcarrier.

Optionally, the apparatus 3 further includes:

a selection unit, configured to detect that a source node and a destination node cannot communicate with each other, or a transmission performance parameter value between a source node and a destination node does not satisfy a preset condition; and

select a relay node between the source node and the destination node.

The apparatus 3 may be a domain master node, or the apparatus 3 may be a field-programmable gate array (FPGA), a dedicated integrated chip, a system on chip (SoC), a central processor unit (CPU), a network processor (NP), a digital signal processing circuit, a micro controller unit (MCU), a programmable logic device (PLD) or another integrated chip that implements a related function.

This embodiment of the present invention and the method embodiment in FIG. 2a are based on a same concept, and technical effects brought by the two embodiments are also the same. For a specific process, refer to the descriptions of the method embodiment in FIG. 2a, and details are not described herein again.

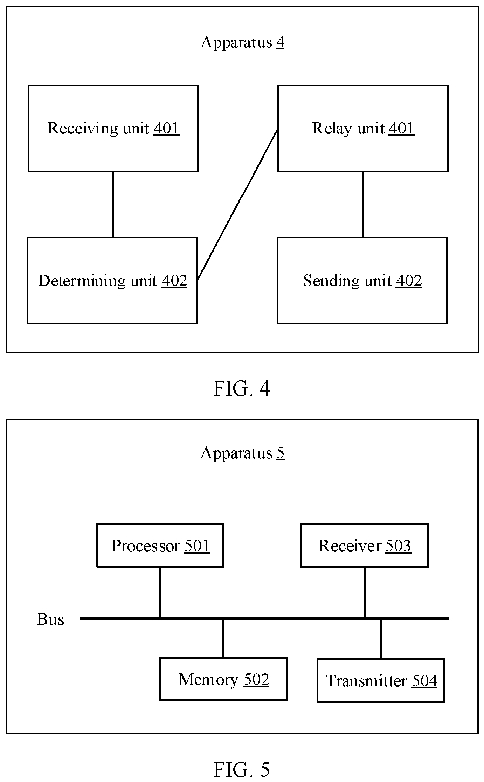

FIG. 4 shows a relay transmission apparatus (hereinafter referred to as an apparatus 4) for a PCL system according to an embodiment of the present invention.

It should be noted that the apparatus 4 shown in FIG. 4 may implement the relay node side in the embodiment shown in FIG. 2a, and the apparatus 4 includes a receiving unit 401, a determining unit 402, a relay unit 403, and a sending unit 404.

The receiving unit 401 is configured to receive transmission slot configuration information from a domain master node, where the transmission slot configuration information carries location information of a transmission slot, the transmission slot is located in a first MAC period, and the first MAC period is divided into m transmission time windows.

The determining unit 402 is configured to determine gain information associated with a transmission time window in which the transmission slot is located.

The relay unit 403 is configured to perform relay processing on a received signal in the transmission slot based on the associated gain information.

The sending unit is configured to output the signal on which the relay processing has been performed.

Optionally, the receiving unit 401 is further configured to receive window configuration information from the domain master node in the first MAC period, where the window configuration information indicates locations of the m transmission time windows and gain information associated with the m transmission time windows respectively.

Optionally, the transmission slot configuration information includes one or more of location information of the transmission slot and a number of the gain information.

The apparatus 3 may be a relay node, and the apparatus 4 may be a field-programmable gate array (FPGA), a dedicated integrated chip, a system on chip (SoC), a central processor unit (CPU) , a network processor (NP), a digital signal processing circuit, a micro controller unit (MCU), a programmable logic device (PLD) or another integrated chip that implements a related function.

This embodiment of the present invention and the method embodiment in FIG. 2a are based on a same concept, and technical effects brought by the two embodiments are also the same. For a specific process, refer to the descriptions of the method embodiment in FIG. 2a, and details are not described herein again.

Optionally, the units in FIG. 3 and FIG. 4 are not limited to being located in two independent devices, and may be located in one device at the same time.

FIG. 5 is a schematic structural diagram of an apparatus, hereinafter referred to as an apparatus 5, according to an embodiment of the present invention. The apparatus 5 may be integrated into the foregoing domain master node or relay node. As shown in FIG. 5, the apparatus includes: a memory 502, a processor 501, a transmitter 504, and a receiver 503.

The memory 502 may be an independent physical unit, and may be connected to the processor 501, the transmitter 504, and the receiver 503 by using a bus. Alternatively, the memory 502, the processor 501, the transmitter 504, and the receiver 501 may be integrated together and implemented, for example, by hardware.

The memory 502 is configured to store a program for implementing the foregoing method embodiments or each module in the apparatus embodiments, and the processor 501 invokes the program to perform the operations of the foregoing method embodiments.

Optionally, when the relay transmission configuration method or relay transmission method for a PCL system in the foregoing embodiments is partially or completely implemented by using software, a random access apparatus may include only a processor. A memory configured to store a program is located outside the random access apparatus, and the processor is connected to the memory by using a circuit/wire and configured to read and execute the program stored in the memory.

The processor may be a central processing unit (CPU), a network processor (NP), or a combination of a CPU and an NP.

The processor may further include a hardware chip. The hardware chip may be an application-specific integrated circuit (ASIC), a programmable logic device (PLD), or a combination thereof. The PLD may be a complex programmable logic device (CPLD), a field-programmable gate array (FPGA), a generic array logic (GAL), or any combination thereof.

The memory may include a volatile memory, for example, a random-access memory (RAM). The memory may alternatively include a non-volatile memory, for example, a flash memory, a hard disk drive (HDD), or a solid-state drive (SSD). The memory may alternatively include a combination of the foregoing types of memories.

In the foregoing embodiments, a sending module or a transmitter performs the steps of sending in the foregoing method embodiments, a receiving module or a receiver performs the steps of receiving in the foregoing method embodiments, and other steps are performed by another module or the processor. The sending module and the receiving module may constitute a transceiver module, and the receiver and the transmitter may constitute a transceiver.

An embodiment of this application further provides a computer storage medium, storing a computer program. The computer program is used to perform the relay transmission configuration method or relay transmission method for a PCL system provided in the foregoing embodiments.

An embodiment of this application further provides a computer program product including an instruction. When the computer program product runs on a computer, the computer is enabled to perform the relay transmission configuration method or relay transmission method for a PCL system provided in the foregoing embodiments.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

# EP 3 764 704 B1

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

**Claims**

1. A relay transmission configuration method for a PLC system, comprising:

   scheduling (S201), by a domain master node, a transmission slot in a first media access control, MAC, period, wherein the first MAC period comprises m transmission time windows in different channel states, and m is an integer greater than 0, wherein the channel state indicates a state in which a channel quality parameter value of a transmission path remains stable in a time interval;
   determining, by the domain master node, a location of the scheduled transmission slot; and the method **characterised by** comprising:
   sending (S202), by the domain master node, transmission slot configuration information to a relay node, where the transmission slot configuration information is used to indicate the location of the transmission slot, and the location of the transmission slot and locations of the m transmission time windows are used to determine (S203) gain information.

2. The method according to claim 1, wherein the transmission slot configuration information is further used to indicate the gain information.

3. The method according to claim 1 or 2, wherein before the scheduling, by a domain master node, a transmission slot in a first media access control MAC period, the method further comprises:

   obtaining, by the domain master node, a channel quality parameter value of a transmission path in a second MAC period, wherein the second MAC period is before the first MAC period;
   determining, by the domain master node, a channel state of the transmission path based on the channel quality parameter value;
   dividing, by the domain master node, the second MAC period into m transmission time windows based on the channel state; and
   determining, by the domain master node, gain information associated with the m transmission time windows respectively.

4. The method according to claim 3, wherein the obtaining, by the domain master node, a channel quality parameter value of a transmission path in the second MAC period comprises:

   scheduling, by the domain master node, a channel assessment time window in the second MAC period;
   sending, by the domain master node, a channel information request to a relay node on the transmission path, wherein the channel information request comprises start time information, end time information of the channel assessment time window, and a requested channel quality parameter type; and
   receiving, by the domain master node, a channel quality parameter value that is of each subpath comprised on the transmission path and that is sent by the relay node.

5. The method according to claim 4, wherein the requested channel quality parameter type comprises:
   one or more of a bit loading table, a channel attenuation value, a signal-to-noise ratio, and noise power.

6. The method according to claim 3 or 4, wherein before obtaining, by the domain master node, the channel quality parameter value of the transmission path within a channel assessment time window, the method further comprises:

   detecting, by the domain master node, that a source node and a destination node cannot communicate with each other, or a transmission performance parameter value between a source node and a destination node does not satisfy a preset condition; and
   selecting, by the domain master node, a relay node between the source node and the destination node.

**7.** A relay transmission configuration apparatus for a PLC system, comprising:

a scheduling unit (301), configured to schedule a transmission slot in a first media access control, MAC, period, wherein the first MAC period comprises m transmission time windows in different channel states wherein the channel state indicates a state in which a channel quality parameter value of a transmission path remains stable in a time interval, and m is an integer greater than 0;
a determining unit (302), configured to determine a location of the scheduled transmission slot; and the relay transmission configuration apparatus **characterised by** comprising:
a sending unit (303), configured to send transmission slot configuration information to a relay node, wherein the transmission slot configuration information is used to indicate the location of the transmission slot, and the location of the transmission slot and locations of the m transmission time windows are used to determine gain information.

**8.** The apparatus according to claim 7, wherein the transmission slot configuration information is further used to indicate the gain information.

**9.** The apparatus according to claim 7 or 8, further comprising:

a window configuration unit, configured to obtain a channel quality parameter value of a transmission path in a second MAC period, wherein the second MAC period is before the first MAC period;
determine a channel state of the transmission path based on the channel quality parameter value;
divide the second MAC period into m transmission time windows based on the channel state; and
determine gain information associated with the m transmission time windows respectively.

**10.** The apparatus according to claim 9, wherein the window configuration unit is further configured to:

schedule a channel assessment time window in the second MAC period;
send a channel information request to a relay node on the transmission path, wherein the channel information request comprises start time information, end time information of the channel assessment time window, and a requested channel quality parameter type; and
receive a channel quality parameter value that is of each subpath comprised on the transmission path and that is sent by the relay node.

**11.** The apparatus according to claim 9, further comprising:

a selection unit, configured to detect that a source node and a destination node cannot communicate with each other, or a transmission performance parameter value between a source node and a destination node does not satisfy a preset condition; and
select a relay node between the source node and the destination node.

**12.** A power line communication system, **characterized by** comprising a domain master node and a relay node, wherein

the domain master node is the relay transmission configuration apparatus of any one of claims 7 to 11; and
the relay node is configured to:

receive the transmission slot configuration information from the domain master node;
determine gain information associated with a transmission time window in which the transmission slot is located;
perform relay processing (S204) on a received signal in the transmission slot based on the associated gain information; and
output the signal (S205) on which the relay processing has been performed.

**Patentansprüche**

**1.** Relaisübertragungskonfigurationsverfahren für ein PLC-System, das Folgendes umfasst:

Planen (S201), durch einen Domänenmasterknoten, eines Übertragungsslots in einer ersten Mediumzugangssteuerungs(media access control - MAC)-Periode, wobei die erste MAC-Periode m Übertragungszeitfenster in unterschiedlichen Kanalzuständen umfasst, und m eine ganze Zahl größer als 0 ist, wobei der Kanalzustand einen Zustand angibt, in dem ein Kanalqualitätsparameterwert eines Übertragungswegs in einem Zeitintervall stabil bleibt;

Bestimmen, durch den Domänenmasterknoten, eines Orts des geplanten Übertragungsslots; und das Verfahren **dadurch gekennzeichnet ist, dass** es Folgendes umfasst:

Senden (S202), durch den Domänenmasterknoten, von Übertragungsslotkonfigurationsinformationen an einen Relaisknoten, wobei die Übertragungsslotkonfigurationsinformationen verwendet werden, um den Ort des Übertragungsslots anzugeben und der Ort des Übertragungsslots und die Orte der m Übertragungszeitfenster verwendet werden, um Gewinninformationen (S203) zu bestimmen.

2. Verfahren nach Anspruch 1, wobei die Übertragungsslotkonfigurationsinformationen ferner verwendet werden, um die Gewinninformationen anzugeben.

3. Verfahren nach Anspruch 1 oder 2, wobei vor dem Planen, durch einen Domänenmasterknoten, eines Übertragungsslot in einer ersten Mediumzugangssteuerungs(MAC)-Periode das Verfahren ferner Folgendes umfasst:

Erhalten, durch den Domänenmasterknoten, eines Kanalqualitätsparameterwerts eines Übertragungswegs in einer zweiten MAC-Periode, wobei die zweite MAC-Periode vor der ersten MAC-Periode liegt;
Bestimmen, durch den Domänenmasterknoten, eines Kanalzustands des Übertragungswegs basierend auf dem Kanalqualitätsparameterwert;
Aufteilen, durch den Domänenmasterknoten, der zweiten MAC-Periode in m Übertragungszeitfenster basierend auf dem Kanalzustand; und
Bestimmen, durch den Domänenmasterknoten, von Gewinninformationen, die den m Übertragungszeitfenstern jeweils zugehörig sind.

4. Verfahren nach Anspruch 3, wobei das Erhalten, durch den Domänenmasterknoten, eines Kanalqualitätsparameterwerts eines Übertragungswegs in der zweiten MAC-Periode Folgendes umfasst:

Planen, durch den Domänenmasterknoten, eines Kanalbewertungszeitfensters in der zweiten MAC-Periode;
Senden, durch den Domänenmasterknoten, einer Kanalinformationsanforderung an einen Relaisknoten auf dem Übertragungsweg, wobei die Kanalinformationsanforderung Startzeitinformationen, Endzeitinformationen des Kanalbewertungszeitfensters und einen angeforderten Kanalqualitätsparametertyp umfassen; und
Empfangen, durch den Domänenmasterknoten, eines Kanalqualitätsparameterwerts, der von jedem Teilweg ist, der auf dem Übertragungsweg umfasst ist und der durch den Relaisknoten gesendet wird.

5. Verfahren nach Anspruch 4, wobei der angeforderte Kanalqualitätsparametertyp Folgendes umfasst:
eine Bitladetabelle, einen Kanaldämpfungswert, ein Signal-Rausch-Verhältnis und/oder eine Rauschleistung.

6. Verfahren nach Anspruch 3 oder 4, wobei vor dem Erhalten, durch den Domänenmasterknoten, des Kanalqualitätsparameterwerts des Übertragungswegs innerhalb eines Kanalbewertungszeitfensters das Verfahren ferner Folgendes umfasst:

Erfassen, durch den Domänenmasterknoten, dass ein Quellknoten und ein Zielknoten nicht miteinander kommunizieren können, oder ein Übertragungsgüteparameterwert zwischen einem Quellknoten und einem Zielknoten eine voreingestellte Bedingung nicht erfüllt; und
Auswählen, durch den Domänenmasterknoten, eines Relaisknotens zwischen dem Quellknoten und dem Zielknoten.

7. Relaisübertragungskonfigurationseinrichtung für ein PLC-System, die Folgendes umfasst:

eine Planungseinheit (301), die konfiguriert ist, um einen Übertragungsslot in einer ersten Mediumzugangssteuerungs(MAC)-Periode zu planen, wobei die erste MAC-Periode m Übertragungszeitfenster in unterschiedlichen Kanalzuständen umfasst, wobei der Kanalzustand einen Zustand angibt, in dem ein Kanalqualitätsparameterwert eines Übertragungswegs in einem Zeitintervall stabil bleibt und m eine ganze Zahl größer als 0 ist;
eine Bestimmungseinheit (302), die konfiguriert ist, um einen Ort des geplanten Übertragungsslots zu bestimmen; und die Relaisübertragungskonfigurationseinrichtung **dadurch gekennzeichnet ist, dass** sie Folgendes umfasst:

eine Sendeeinheit (303), die konfiguriert ist, um Übertragungsslotkonfigurationsinformationen an einen Relaisknoten zu senden, wobei die Übertragungsslotkonfigurationsinformationen verwendet werden, um den Ort des Übertragungsslots anzugeben und der Ort des Übertragungsslots und die Orte der m Übertragungszeitfenster verwendet werden, um Gewinninformationen zu bestimmen.

8. Einrichtung nach Anspruch 7, wobei die Übertragungsslotkonfigurationsinformationen ferner verwendet werden, um die Gewinninformationen anzugeben.

9. Einrichtung nach Anspruch 7 oder 8, die ferner Folgendes umfasst:

eine Fensterkonfigurationseinheit, die konfiguriert ist, um einen Kanalqualitätsparameterwert eines Übertragungswegs in einer zweiten MAC-Periode zu erhalten, wobei die zweite MAC-Periode vor der ersten MAC-Periode liegt;
Bestimmen eines Kanalzustands des Übertragungswegs basierend auf dem Kanalqualitätsparameterwert;
Aufteilen der zweiten MAC-Periode in m Übertragungszeitfenster basierend auf dem Kanalzustand; und
Bestimmen von Gewinninformationen, die den m Übertragungszeitfenstern jeweils zugehörig sind.

10. Einrichtung nach Anspruch 9, wobei die Fensterkonfigurationseinheit ferner für Folgendes konfiguriert ist:

Planen eines Kanalbewertungszeitfensters in der zweiten MAC-Periode;
Senden einer Kanalinformationsanforderung an einen Relaisknoten auf dem Übertragungsweg, wobei die Kanalinformationsanforderung Startzeitinformationen, Endzeitinformationen des Kanalbewertungszeitfensters und einen angeforderten Kanalqualitätsparametertyp umfasst; und
Empfangen eines Kanalqualitätsparameterwerts, der von jedem Teilweg ist, der auf dem Übertragungsweg umfasst ist und der durch den Relaisknoten gesendet wird.

11. Einrichtung nach Anspruch 9, die ferner Folgendes umfasst:

eine Auswahleinheit, die konfiguriert ist, um zu erfassen, dass ein Quellknoten und ein Zielknoten nicht miteinander kommunizieren können, oder ein Übertragungsgüteparameterwert zwischen einem Quellknoten und einem Zielknoten eine voreingestellte Bedingung nicht erfüllt; und
Auswählen eines Relaisknotens zwischen dem Quellknoten und dem Zielknoten.

12. Leistungsleitungskommunikationssystem, das **dadurch gekennzeichnet ist, dass** es einen Domänenmasterknoten und einen Relaisknoten umfasst, wobei

der Domänenmasterknoten die Relaisübertragungskonfigurationseinrichtung nach einem der Ansprüche 7 bis 11 ist; und
der Relaisknoten für Folgendes konfiguriert ist:

Empfangen der Übertragungsslotkonfigurationsinformationen von dem Domänenmasterknoten;
Bestimmen von Gewinninformationen, die einem Übertragungszeitfenster zugehörig sind, in dem sich der Übertragungsslot befindet;
Durchführen einer Relaisverarbeitung (S204) auf einem empfangenen Signal in dem Übertragungsslot basierend auf den zugehörigen Gewinninformationen; und
Ausgeben des Signals (S205), an dem die Relaisverarbeitung durchgeführt wurde.

## Revendications

1. Procédé de configuration de transmission de relais pour un système PLC, comprenant :

la programmation (S201), par un nœud maître de domaine, d'un créneau de transmission dans une première période de commande d'accès au support, MAC, la première période MAC comprenant m fenêtres de temps de transmission dans différents états de canal, et m étant un entier supérieur à 0, l'état de canal indiquant un état dans lequel une valeur de paramètre de qualité de canal d'un trajet de transmission reste stable dans un intervalle de temps ;
la détermination, par le nœud maître de domaine, d'un emplacement du créneau de transmission programmé ;

et le procédé **caractérisé en ce qu'**il comprend :
l'envoi (S202), par le nœud maître de domaine, d'informations de configuration de créneau de transmission à un nœud relais, les informations de configuration de créneau de transmission étant utilisées pour indiquer l'emplacement du créneau de transmission, et l'emplacement du créneau de transmission et les emplacements des m fenêtres de temps de transmission étant utilisés pour déterminer (S203) des informations de gain.

2. Procédé selon la revendication 1, dans lequel les informations de configuration de créneau de transmission sont en outre utilisées pour indiquer les informations de gain.

3. Procédé selon la revendication 1 ou 2, dans lequel avant la programmation, par un nœud maître de domaine, d'un créneau de transmission dans une première période MAC de commande d'accès au support, le procédé comprend en outre :

l'obtention, par le nœud maître de domaine, d'une valeur de paramètre de qualité de canal d'un trajet de transmission dans une seconde période MAC, la seconde période MAC étant avant la première période MAC ;
la détermination, par le nœud maître de domaine, d'un état de canal du trajet de transmission en fonction de la valeur de paramètre de qualité de canal ;
la division, par le nœud maître de domaine, de la seconde période MAC en m fenêtres de temps de transmission en fonction de l'état du canal ; et
la détermination, par le nœud maître de domaine, des informations de gain associées aux m fenêtres de temps de transmission respectivement.

4. Procédé selon la revendication 3, dans lequel l'obtention, par le nœud maître de domaine, d'une valeur de paramètre de qualité de canal d'un trajet de transmission dans la seconde période MAC comprend :

la programmation, par le nœud maître de domaine, d'une fenêtre de temps d'évaluation de canal dans la seconde période MAC ;
l'envoi, par le nœud maître de domaine, d'une demande d'informations de canal à un nœud relais sur le trajet de transmission, la demande d'informations de canal comprenant des informations de temps de début, des informations de temps de fin de la fenêtre de temps d'évaluation de canal et un type de paramètre de qualité de canal demandé ; et
la réception, par le nœud maître de domaine, d'une valeur de paramètre de qualité de canal qui est de chaque sous-trajet compris sur le trajet de transmission et qui est envoyée par le nœud relais.

5. Procédé selon la revendication 4, dans lequel le type de paramètre de qualité de canal demandé comprend :
une table de chargement de bits et/ou une valeur d'atténuation de canal et/ou un rapport signal sur bruit et/ou une puissance de bruit.

6. Procédé selon la revendication 3 ou 4, dans lequel avant l'obtention, par le nœud maître de domaine, de la valeur du paramètre de qualité de canal du trajet de transmission dans une fenêtre de temps d'évaluation de canal, le procédé comprend en outre :

la détection, par le nœud maître de domaine, qu'un nœud source et un nœud de destination ne peuvent pas communiquer l'un avec l'autre, ou qu'une valeur de paramètre de performance de transmission entre un nœud source et un nœud de destination ne satisfait pas une condition prédéfinie ; et
la sélection, par le nœud maître de domaine, d'un nœud relais entre le nœud source et le nœud de destination.

7. Appareil de configuration de transmission de relais pour un système CPL, comprenant :

une unité de programmation (301), configurée pour programmer un créneau de transmission dans une première période de commande d'accès au support, MAC, la première période MAC comprenant m fenêtres de temps de transmission dans différents états de canal, l'état de canal indiquant un état dans lequel une valeur de paramètre de qualité de canal d'un trajet de transmission reste stable dans un intervalle de temps, et m étant un entier supérieur à 0 ;
une unité de détermination (302), configurée pour déterminer un emplacement du créneau de transmission programmé ; et l'appareil de configuration de transmission de relais **caractérisé en ce qu'**il comprend :
une unité d'envoi (303), configurée pour envoyer des informations de configuration de créneau de transmission à un nœud relais, les informations de configuration de créneau de transmission étant utilisées pour indiquer l'emplacement du créneau de transmission, et l'emplacement du créneau de transmission et les emplacements des m fenêtres de temps de transmission étant utilisés pour déterminer les informations de gain.

8. Appareil selon la revendication 7, dans lequel les informations de configuration de créneau de transmission sont en outre utilisées pour indiquer les informations de gain.

9. Appareil selon la revendication 7 ou 8, comprenant en outre :

une unité de configuration de fenêtre, configurée pour obtenir une valeur de paramètre de qualité de canal d'un trajet de transmission dans une seconde période MAC, la seconde période MAC étant avant la première période MAC ;
la détermination d'un état de canal du trajet de transmission en fonction de la valeur du paramètre de qualité de canal ;
la division de la seconde période MAC en m fenêtres de temps de transmission en fonction de l'état du canal ; et
la détermination des informations de gain associées aux m fenêtres de temps de transmission respectivement.

10. Appareil selon la revendication 9, dans lequel l'unité de configurationde de fenêtre est en outre configurée pour :

programmer une fenêtre de temps d'évaluation de canal dans la seconde période MAC ;
envoyer une demande d'informations de canal à un nœud relais sur le trajet de transmission, la demande d'informations de canal comprenant des informations de temps de début, des informations de temps de fin de la fenêtre de temps d'évaluation de canal et un type de paramètre de qualité de canal demandé ; et
recevoir une valeur de paramètre de qualité de canal qui est de chaque sous-trajet compris sur le trajet de transmission et qui est envoyée par le nœud relais.

11. Appareil selon la revendication 9, comprenant en outre :

une unité de sélection, configurée pour détecter qu'un nœud source et un nœud de destination ne peuvent pas communiquer l'un avec l'autre, ou une valeur de paramètre de performance de transmission entre un nœud source et un nœud de destination ne satisfait pas une condition prédéfinie ; et
sélectionner un nœud relais entre le nœud source et le nœud de destination.

12. Système de communication par ligne électrique, **caractérisé en ce qu'**il comprend un nœud maître de domaine et un nœud relais, dans lequel

le nœud maître de domaine est l'appareil de configuration de transmission de relais selon l'une quelconque des revendications 7 à 11 ; et
le nœud relais est configuré pour :

recevoir les informations de configuration de créneau de transmission à partir du nœud maître de domaine ;
déterminer les informations de gain associées à une fenêtre de temps de transmission dans laquelle se trouve le créneau de transmission ;
effectuer un traitement de relais (S204) sur un signal reçu dans le créneau de transmission en fonction des informations de gain associées ; et
émettre le signal (S205) sur lequel le traitement de relais a été effectué.

FIG. 1

| Domain master node | | Relay node |
|---|---|---|

S201. Schedule a transmission slot in a first media access control period

S202. Determine a location of the scheduled transmission slot

S203. Transmission slot configuration information ⟶

S204. Determine gain information associated with a transmission time window in which the transmission slot is located

S205. Perform relay processing on a received signal in the transmission slot based on the associated gain information

S206. Output the signal on which the relay processing has been performed

FIG. 2a

| Second media access control period | | | | | | | | | | | First media access control period | | | | | | | | | | |
|---|---|---|---|---|---|---|---|---|---|---|---|---|---|---|---|---|---|---|---|---|---|
| Transmission time window 1 | | | | | Transmission time window 2 | | | | | | Transmission time window 2 | | | | | Transmission time window 2 | | | | | |
| 1 | 2 | 3 | 4 | 5 | 6 | 7 | 8 | 9 | 10 | 11 | 1 | 2 | 3 | 4 | 5 | 6 | 7 | 8 | 9 | 10 | 11 |

Transmission slot

FIG. 2b

| | | Second media access control period | | | | | | | | | | First media access control period | | | | | | | | | |
|---|---|---|---|---|---|---|---|---|---|---|---|---|---|---|---|---|---|---|---|---|---|
| | Transmission time window 1 | | | | Transmission time window 2 | | | | | | | Transmission time window 1 | | | | Transmission time window 2 | | | | | |
| 1 | 2 | 3 | 4 | 5 | 6 | 7 | 8 | 9 | 10 | 11 | ... | 1 | 2 | 3 | 4 | 5 | 6 | 7 | 8 | 9 | 10 | 11 |

Transmission slot

FIG. 2c

FIG. 2d

FIG. 3

Apparatus 4

Receiving unit 401

Relay unit 401

Determining unit 402

Sending unit 402

FIG. 4

Apparatus 5

Processor 501

Receiver 503

Bus

Memory 502

Transmitter 504

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015372717 A
- EP 2733857 A
- US 2015271021 A